# DEMANDE DE BREVET EUROPEEN

(11) **EP 0 723 105 A2**
(43) Date de publication de la demande: **24.07.1996**
(21) Numéro de dépôt: 95420362.6
(22) Date de dépôt: 19.12.1995
(51) Int. Cl.: F16L 55/165, B32B 7/08

(54) **Structure complexe utilisable pour la réfection de conduites et élément tubulaire réalisé a partir d'une telle structure**

(30) Priorité: 23.12.1994 FR 9415811; 23.12.1994 FR 9415812; 19.09.1995 FR 9511175
(71) Demandeur: ETABLISSEMENTS LES FILS D'AUGUSTE CHOMARAT ET CIE, F-75008 Paris (FR)
(72) Inventeur: Fourezon, André, F-07160 Le Cheylard (FR); Klethi, Thierry, F-07160 Le Cheylard (FR)
(74) Mandataire: Laurent, Michel

(57) **Abrégé**

Structure complexe utilisable pour la réfection de conduites, constituée par :
- un support textile (1) comportant au moins une nappe fibreuse constituée de fibres discontinues orientées au hasard les unes par rapport aux autres, et ce sensiblement dans le plan de ladite nappe, associée à des éléments de renfort destinés à lui conférer des caractéristiques mécaniques appropriées dans le sens longitudinal et transversal, la liaison entre les différents éléments constituant le renfort textile étant obtenue par couture/tricotage, les colonnes de mailles étant disposées dans le sens longitudinal du complexe,
- une couche superficielle étanche (2) recouvrant l'une des faces du support textile (1) précité,

***caractérisé*** en ce que la liaison entre la couche superficielle étanche (2) et la surface du support textile (1), est obtenue par l'intermédiaire d'au moins un film synthétique (3) à base de matière thermoplastique, ledit film étant maintenu contre la structure fibreuse (1) par les coutures de liaison (4) de cette dernière, et étant porté, lors de l'application de la couche superficielle (2), à une température telle qu'il soit intimement lié à celle-ci.

## Description

Pour la réfection de conduites ou ouvrages similaires, enterrés ou non, il a été proposé depuis fort longtemps, ainsi que cela ressort notamment des brevets britanniques 1 340 068 et 1 357 355, de recouvrir la surface interne de l'ouvrage avec une structure tubulaire réalisée à partir d'un matériau complexe flexible, comportant une membrane imperméable aux fluides et une structure de base fibreuse qui est imprégnée d'une résine synthétique non polymérisée, et après plaquage dudit complexe contre la surface de l'ouvrage à réparer, à provoquer la polymérisation de la résine de manière à former un "manchonnage" interne.

Concernant la mise en place d'une telle structure tubulaire à l'intérieur de la conduite à rénover, deux techniques principales sont à ce jour utilisées.

La première, qui ressort plus particulièrement du brevet britannique 1 357 355, consiste à introduire le matériau tubulaire préalablement réalisé à l'intérieur de la conduite à rénover, de telle sorte que la structure fibreuse soit positionnée en regard de la surface à rénover, et que la couche superficielle imperméable soit, quant à elle, située à l'intérieur en regard de la zone d'écoulement. Après mise en place sur toute la longueur de la conduite, on met la gaine sous pression de telle sorte qu'elle vienne plaquer contre la surface interne et on provoque alors la polymérisation de la résine.

Une autre technique dite par "retournement" consiste, ainsi que cela ressort du brevet britannique 1 449 455 et des brevets US-A-4,064,211, US-A-4,135,958 et US-A-4,582,247, à introduire la gaine préalablement formée avec la surface étanche située à l'extérieur puis, lors de l'introduction à l'intérieur de la conduite, à provoquer le retournement de la dite gaine, de telle sorte que la structure fibreuse vienne en contact avec la surface interne du tube et que la couche étanche soit située à l'intérieur.

Une telle manière de procéder permet d'imprégner la structure fibreuse de résine non polymérisée au fur et à mesure de sa mise en place à l'intérieur de la conduite. Par ailleurs, la polymérisation peut être réalisée également en continu, par exemple par rayonnement lumineux.

Ces deux techniques et plus particulièrement la technique de mise en place par retournement, impliquent d'avoir un matériau de base qui présente des caractéristiques mécaniques suffisantes pour résister aux contraintes exercées lors de la mise en place. En effet, lors de cette opération, il est nécessaire d'appliquer une très forte pression contre la structure afin de provoquer son retournement, ce qui, d'une part, risque d'entraîner une rupture au niveau de la zone de jonction en général réalisée par couture, ainsi qu'un risque de délaminage, notamment au niveau de l'interface structure fibreuse/film d'étanchéité.

Dans son brevet EP-A-0 542 639, le Demandeur a proposé une structure complexe particulièrement adaptée pour réaliser la réfection de conduites.

Cette structure est du type constitué par un support textile comportant au moins une nappe constituée de fibres discontinues orientées au hasard les unes par rapport aux autres, et ce sensiblement dans le plan de ladite nappe, associée à des éléments de renfort destinés à lui conférer des caractéristiques mécaniques appropriées, ledit support étant recouvert sur au moins l'une de ses faces d'une couche superficielle étanche.

Selon une forme de réalisation, la liaison de la nappe fibreuse et des éléments de renfort est réalisée par couture/tricotage, les colonnes de mailles étant disposées dans le sens longitudinal du complexe, la couche superficielle étanche étant constituée par un film de matière thermoplastique, l'association de ces deux constituants étant réalisée par calandrage immédiatement à la sortie d'une extrudeuse de formation dudit film thermoplastique.

Après réalisation du complexe plat, celui-ci est confectionné sous la forme d'un tube en reliant les deux bords latéraux, par exemple par couture.

A l'usage, il a été constaté que lorsqu'un tel élément tubulaire était mis en place à l'intérieur d'une conduite selon la technique dite par retournement, technique qui implique d'exercer une pression importante, qu'il pouvait y avoir un risque de délaminage entre la couche superficielle étanche et le support textile du complexe. En effet, en général, le support textile est à base de fibres ou filaments de verre vis-à-vis desquels l'adhérence d'un film thermoplastique est faible, la liaison entre ces deux éléments étant réalisée, comme cela ressort du document précité, par un accrochage mécanique entre le film superficiel étanche qui pénètre, grâce à l'opération de calandrage, sur une partie de l'épaisseur du support textile.

Or on a trouvé, et c'est ce qui fait l'objet de la présente invention, un perfectionnement à un tel type de matériau qui permet de résoudre ce problème.

D'une manière générale, l'invention concerne donc une structure complexe utilisable pour la réfection de conduites du type constitué par :
- un support textile comportant au moins une nappe fibreuse constituée de fibres discontinues orientées au hasard les unes par rapport aux autres, et ce sensiblement dans le plan de ladite nappe, associée à des éléments de renfort destinés à lui conférer des caractéristiques mécaniques appropriées dans le sens longitudinal et transversal, la liaison entre les différents éléments constituant le renfort textile étant obtenue par couture/tricotage, les colonnes de mailles étant disposées dans le sens longitudinal du complexe,
- une couche superficielle étanche recouvrant l'une des faces du support textile précité.

La structure selon l'invention se caractérise en ce que la liaison entre la couche superficielle étanche et la surface du support textile, est obtenue par l'intermédiaire d'au moins un film synthétique à base de matière thermoplastique, ledit film étant maintenu contre la structure fibreuse par les coutures de liaison de cette dernière, et étant porté, lors de l'application de la couche superficielle, à une température telle qu'il soit intimement lié à celle-ci.

Le film associé à la structure fibreuse peut éventuellement être de même nature que la couche étanche superficielle et, de préférence, sera à base d'une matière thermoplastique ayant un point de fusion inférieur à celui de la matière constituant la couche superficielle.

Selon une forme de réalisation conforme à l'invention, dans laquelle la couche superficielle étanche est réalisée à partir de polychlorure de vinyle, le film de liaison thermofusible sera avantageusement constitué par un film de polyéthylène ayant un point de fusion de l'ordre de 160°C.

Dans l'hypothèse où la couche de surface est constituée par du polyéthylène, le film de liaison peut être soit également constitué par un film de polyéthylène, soit constitué par un film à base d'un copolyamide ayant un point de fusion de l'ordre de 105 à 120°C.

Grâce à une telle configuration, il a été constaté, qu'après mise sous forme tubulaire, que les risques de délaminage entre la couche étanche et la structure de base fibreuse lors de la réalisation du manchon assurant la réfection de la conduite, étaient pratiquement inexistants, du fait du blocage mécanique du film de liaison par les coutures.

Avantageusement, dans une structure complexe conforme à l'invention, les éléments de renfort sont constitués par des mèches parallèles de filaments de verre et/ou de tissus chaîne et trame également à base de mèches de verre, les coutures de liaison étant réalisées de telle sorte que les chaînettes soient orientées dans le sens de la longueur de l'article et soient positionnées entre deux mèches longitudinales consécutives.

Par ailleurs, le support textile comporte, de préférence, sur sa face externe située du côté de la couche étanche, une nappe textile apte à s'allonger dans le sens transversal. Une telle nappe textile est avantageusement constituée par un tissu chaîne et trame en fils synthétiques, polyester notamment, permettant d'obtenir un allongement de l'ordre de 10 % ou légèrement plus dans le sens trame.

De plus, la liaison entre la couche superficielle étanche et la surface du support textile, peut être obtenue soit par l'intermédiaire d'un seul film synthétique disposé entre la couche superficielle étanche et la surface externe dudit support textile, soit, éventuellement, par l'intermédiaire de deux films synthétiques, l'un disposé entre la couche superficielle étanche et la surface du support textile, l'autre étant disposé à l'intérieur du support textile immédiatement en dessous de la nappe textile de surface.

La mise sous forme de structures tubulaires d'une telle structure plane, afin de réaliser un manchon permettant la réfection d'une conduite, est obtenue en joignant les deux bords latéraux par couture.

Avantageusement, la jonction des bords latéraux pour former la gaine est réalisée de telle sorte que la zone de jonction comporte une bande textile cousue à ce niveau sur toute la longueur du tube et qui assure un recouvrement de part et d'autre de ladite couture.

Une telle manière de procéder permet de renforcer la zone de jonction, non seulement lors de la mise en place du tube à l'intérieur de la conduite, mais également après polymérisation de la résine pour former le "manchonnage" interne final de la conduite.

Selon une première forme de réalisation d'une telle jonction, la bande textile de recouvrement est constituée par la structure de base elle-même, la liaison entre les deux bord de cette structure étant réalisée en effectuant la couture en retrait par rapport à l'un des bords dont la partie libre recouvre, après couture, l'autre bord sur quelques centimètres de largeur.

Selon une autre forme de réalisation conforme à l'invention, la jonction est réalisée par une bande textile additionnelle constituée de préférence par un tissu raide et nerveux, la structure complexe de base étant positionnée bord à bord et la couture assurant la jonction emprisonnant la bande de renforcement superficielle dans sa partie centrale.

Enfin, selon une forme de réalisation préférentielle, on rapporte au dessus de la zone de jonction un élément de renforcement en forme de bande, fixé à la couche étanche et qui est avantageusement constitué par un ruban tissé de manière conventionnelle, c'est-à-dire dont la trame est continue et forme une lisière le long des bords ; avantageusement, ledit ruban est réalisé en fils aramide, et est emprisonné entre deux films qui débordent latéralement par rapport aux lisières et qui permettent l'association avec la couche d'étanchéité par thermocollage.

L'invention et les avantages qu'elle apporte seront cependant mieux compris grâce à l'exemple de réalisation donné ci-après à titre indicatif mais non limitatif et qui est illustré par les schémas annexés dans lesquels :
- la figure 1 illustre en perspective d'une manière schématique un matériau complexe réalisé conformément à l'invention ;
- la figure 2 est également une vue schématique en perspective montrant la manière dont est mis sous forme tubulaire un tel matériau pour réaliser la réfection d'une conduite ;
- les figures 3 et 4 sont respectivement des vues en perspective et en coupe transversale selon l'axe YY d'un élément de renforcement de la zone de jonction du matériau lorsqu'il est mis sous forme tubulaire ;
- les figures 5a et 5b sont des représentations sous forme de diagramme de deux exemples concrets de matériaux complexes conformes à l'invention et permettant de réaliser des structures tubulaires ;
- les figures 6 et 7 illustrent une première forme de réalisation d'une structure tubulaire à partir d'un matériau conforme à l'invention ;
- les figures 8 et 9 illustrent une autre forme de réalisation d'une structure tubulaire à partir d'un matériau conforme à l'invention.

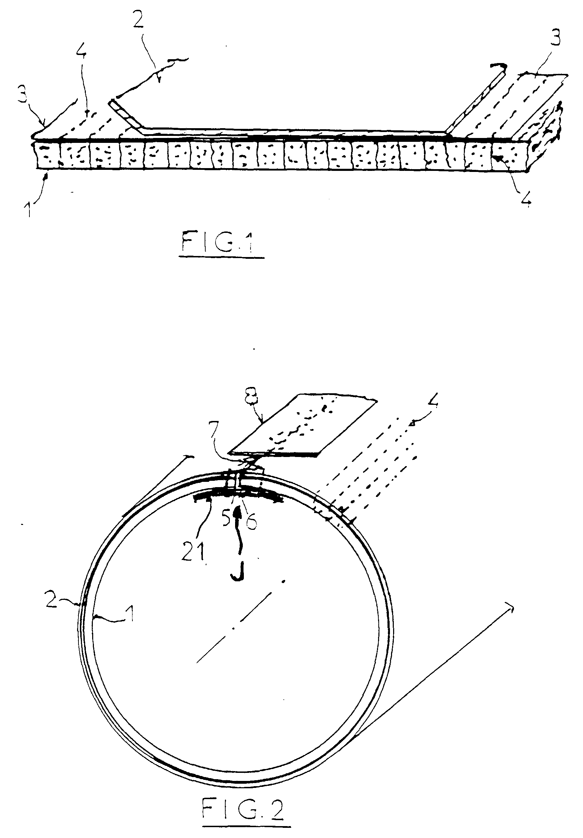

En se reportant aux schémas annexés, et plus particulièrement à la figure 1, le matériau conforme à l'invention se compose essentiellement d'un support textile de base désigné par la référence générale (1), et qui est recouvert sur l'une de ses faces par une couche superficielle étanche désignée par la référence générale (2).

Le support textile est constitué par un complexe comportant au moins une nappe fibreuse à base de fibres discontinues orientées au hasard les unes par rapport aux autres, et ce sensiblement dans le plan de ladite nappe, associée à des éléments de renfort destinés à lui conférer des caractéristiques mécaniques appropriées tant dans le sens longitudinal que transversal.

Comme fibres constituant la ou les nappes fibreuses entrant dans la constitution du complexe, on utilisera tout type de fibres connues telles que fibres de verre, fibres chimiques en général, éventuellement en mélange. Par ailleurs, la nappe fibreuse peut être constituée par l'association de plusieurs couches différentes, tel que par exemple un mat de verre aiguilleté avec un mat de fibres de polyester, polypropylène...

Les éléments de renfort associés à cette nappe peuvent être constitués soit de mèches parallèles de filaments de verre et/ou de tissus chaine et trame également à base de mèches de verre.

La liaison des éléments nappes fibreuses et éléments de renfort est obtenue selon la technique connue de couture/tricotage (technique Malimo). Cette liaison est réalisée de telle sorte que les chainettes soient orientées dans le sens longitudinal de l'article, ce qui renforce le complexe dans le sens long et de préférence au niveau de la zone comprise entre deux mèches longitudinales consécutives, ce qui évite une surépaisseur.

Sur l'une des faces du support textile (1) précité, est rapportée une couche superficielle étanche (2) constituée par un film de matière thermoplastique.

Conformément à l'invention, ce film de matière thermoplastique est préalablement réalisé, le film pouvant être à base de polychlorure de vinyle mais de préférence à base de polyéthylène, notamment de polyéthylène basse densité.

L'association de ce film (2) est faite avec la structure textile support (1), non pas par calandrage en sortie d'une filière d'extrusion comme dans le brevet européen 0 542 639, mais par l'intermédiaire d'un film synthétique additionnel (3), également à base de matière thermoplastique, qui a été préalablement associé à la structure fibreuse de base (1) lors de sa réalisation et qui est maintenu contre celle-ci par les coutures de liaison (4).

L'association de la couche superficielle étanche (2) avec la structure fibreuse (1) revêtue du film de liaison (3), est obtenue en portant ce dernier à une température telle que lorsque l'on applique le film étanche (2) contre le support (1), par exemple lors d'une opération de calandrage, on provoque la liaison de la couche superficielle (2) avec le film (3) préchauffé.

Si le film (3) associé à la structure fibreuse (1) et qui permet d'assurer la liaison peut être de même nature que la couche étanche superficielle (2), de préférence, il sera à base d'une matière thermoplastique ayant un point de fusion inférieur à celui de la matière constituant ladite couche superficielle.

Dans le cas où la couche superficielle (2) est constituée par un film de polyéthylène, le film de liaison (3) peut, soit être également constitué par un film de polyéthylène, soit constitué par un film à base d'un copolyamide ayant un point de fusion de 120°C environ.

La structure complexe étant ainsi formée, on réalise un tube en joignant les deux bords latéraux (5,6), tube dont les dimensions sont adaptées en fonction du diamètre des conduites à rénover. La liaison J des bords latéraux (5,6) est réalisée par couture (7) au moyen d'un fil de type aramide permettant d'obtenir une très grande résistance.

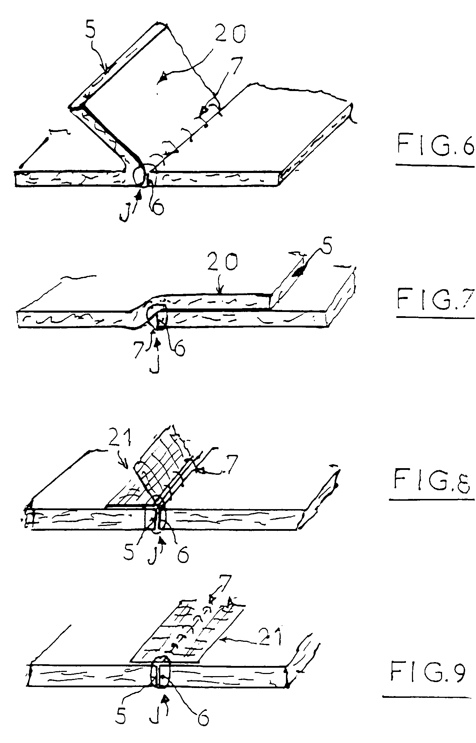

Cette liaision J peut être réalisé soit bord à bord comme illustré aux figures 2 et 9, soit comme illustré aux figures 6 et 7.

En procédant de la manière illustrée aux figures 6 et 7, on obtient un renforcement au niveau de la zone de jonction sans apport d'élément additionnel de renfort. Pour ce faire, et ainsi que cela ressort de la figure 6, on réalise la couture (7) de telle sorte qu'elle lie d'une part l'un des bords latéraux de la bande de matériau complexe réalisé préalablement, dans le cas présent le bord (6), et que d'autre part, elle soit située en retrait par rapport au second bord (5).

En procédant d'une telle manière, et comme cela ressort de la figure 7 après couture, la zone libre (20) située entre la couture (7) et le bord (5) se rabat latéralement au dessus de l'autre bord (6), en venant recouvrir ledit bord sur quelques centimètres de largeur.

Dans la forme de réalisation illustrée par les figures 2, 8 et 9, les deux bords (5,6) du complexe (9) sont positionnés côte à côte lors de la réalisation de la couture (7).

Dans cette forme de réalisation, on réalise un renforcement de la zone de jonction J en rapportant un tissu (21) raide et flexible, par exemple à base de fils de polyester, de fils de verre ou d'aramide. La couture (7) est réalisée de manière à ce qu'elle relie d'une part les deux bords (5,6) de la structure de base fibreuse (2) et qu'elle soit située en retrait par rapport aux lisières du tissu, ce qui après liaison, permet d'avoir un recouvrement de part et d'autre de la zone de jonction J.

Le renforcement peut également être obtenu en utilisant à la place d'un tissu une bande fibreuse non tissée.

La largeur de la bande de renforcement sera fonction du diamètre des tubes à réaliser. A titre indicatif, pour des conduites standard, une largeur totale de dix centimètres permettant d'avoir un recouvrement de part et d'autre de la zone de jonction de cinq centimètres, est parfaitement adaptée.

Le tube étant formé, on rapporte alors au-dessus de la couture (7) une bande de renforcement (8) solidarisée à la surface de la couche étanche (2).

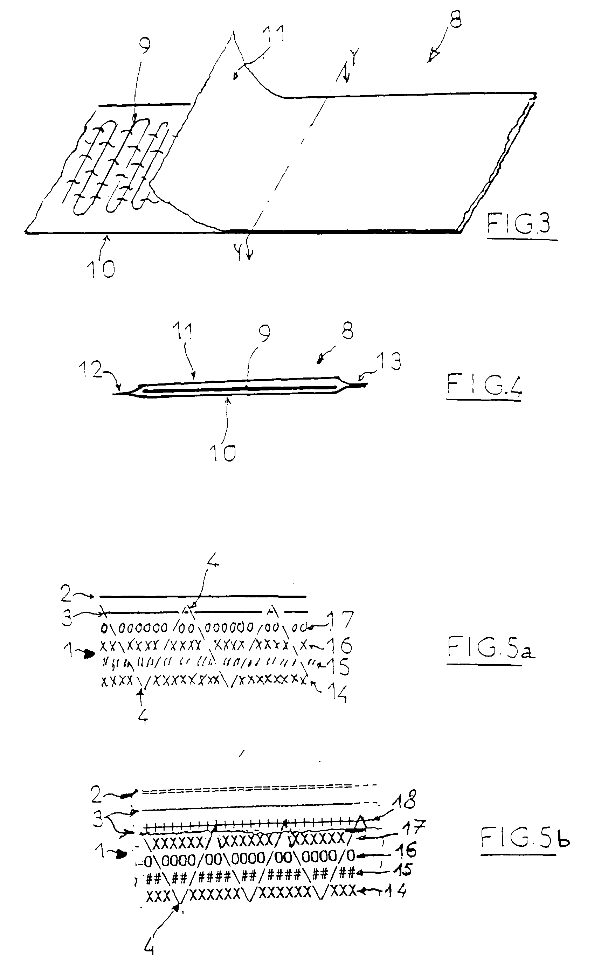

Selon une forme préférentielle de réalisation conforme à l'invention, cette couche de renforcement illustrée aux figures 3 et 4, est constituée par un ruban tissé (9) emprisonné entre deux films (10,11), cesdits films étant soudés latéralement entre eux, les zones de soudure (12,13) débordant par rapport aux lisières du ruban (9). Cet élément de renforcement est solidarisé par thermocollage à la surface de la couche d'étanchéité (2).

Les figures 5a et 5b illustrent deux types d'exemples concrets de matériaux conformes à l'invention particulièrement adaptés pour la réfection de conduites en mettant en oeuvre la technique par retournement.

Dans l'exemple de réalisation illustré à la figure 5a, la structure de base fibreuse (1) est constituée par la superposition de quatre couches de matière textile, à savoir un mat de verre (14) pesant 650 g/m2, une âme non tissée (15) constituée par une nappe à base de fibres de polypropylène pesant 250 g/m2, un second mat (16) à base de fibres de verre pesant 650 g/m2 recouvert par un tissu chaîne et trame (17) à base de mèches de verre de 2400 tex, pesant 800 g/m2 et comportant 1,8 mèche/centimètre dans le sens trame et 1,6 mèche/centimètre dans le sens chaine.

L'utilisation dans le complexe d'une couche intermédiaire en fibres de polypropylène favorise l'imprégnation par la résine.

Dans l'exemple de réalisation illustré à la figure 5b, la structure de base fibreuse (1) est constituée par la superposition de cinq couches de matière textile, à savoir un mat de verre (14) pesant 650 g/m2, une âme non tissée (15) constituée par une nappe à base de fibres de polypropylène pesant 250 g/m2, un tissu chaîne et trame (16) à base de mèches de verre de 1200 tex, pesant 610 g/m2 et comportant 2,8 mèches/centimètre dans le sens trame et 2,2 mèches/centimètre dans le sens chaine, un second mat (17) pesant également 650 g/m2 recouvert d'un tissu (18) en polyester , pesant 75 g/m2 et réalisé à partir de fils ayant un titre de 1100 tex, la densité en chaine étant de un fil par centimètre et la densité en trame de six fils par centimètre, ce tissu présentant une extensibilité à la traction dans le sens trame de l'ordre de 12 %.

L'ensemble des couches est lié par couture/tricotage (technique Malimo) (4) dans le sens de sa longueur. Les coutures sont réalisées à partir d'un fil aramide ayant un titre de 1270 dtex, et ce à raison d'une couture environ tous les 1,6 cm.

Dans le premier exemple de réalisation illustré à la figure 5a, la structure fibreuse (1) est recouverte d'un seul film (3) destiné à servir d'élément de liaison avec la couche étanche (2), alors que dans l'exemple de réalisation illustré à la figure 5b, on utilise deux films (3) pour assurer le collage, l'un étant disposé en dessous du tissu (18) et intégré à la structure textile (1), l'autre disposé contre la surface externe du complexe textile (1). Ces films de liaison sont de préférence constitués par un film à base de copolyamide, et notamment de copolyamide/polyéthylène ayant une épaisseur de 50 microns et un point de collage d'environ 105°C.

Les complexes étant ainsi réalisés, on réalise l'assemblage avec une couche superficielle d'étanchéité (2) formée par un film en polyéthylène de 300 microns d'épaisseur. Cet assemblage est obtenu en chauffant le ou les film(s) (3) et, simultanément en appliquant contre ce dernier le film d'étanchéité (2).

La mise sous forme tubulaire est réalisée au moyen d'une couture (7) réalisée avec un fil aramide de 1270 dtex.

Par ailleurs, lors de la mise sous forme tubulaire, on rapporte de préférence contre le mat de verre (14), de part et d'autre de la zone de liaison (5), une bande fibreuse (21) ayant une largeur de dix centimètres et qui est constituée d'un mat de verre pesant 650 g/m2 associé à un tissu, cette bande de renfort étant liée par la couture (4) et débordant latéralement de part et d'autre de la zone de jonction.

Le tube étant ainsi formé, on rapporte au-dessus de la zone de jonction une bande de renforcement (8) telle qu'illustrée aux figures 3 et 4. Cette bande a une largeur de dix centimètres et est constituée par un tissu (9) ayant une largeur de huit centimètres et comportant en chaine 4 fils de 68 tex par cm et comme trame un fil aramide ayant un titre de 1270 dtex. La densité de tissage est de l'ordre de trois trames par centimètres, l'armure étant une armure toile. Cette bande de tissu (9) est emprisonnée entre deux films (11,12) de polyéthylène soudés latéralement entre eux. Ce ruban est rapporté contre la surface du tube par thermousoudage.

Les tubes réalisés conformément à l'invention sont particulièrement adaptés pour la réfection de conduites et après mise en place et polymérisation de la résine, permettent d'obtenir un manchon parfaitement régulier sans risque de délaminage entre le film étanche et la structure fibreuse.

Bien entendu, l'invention n'est pas limitée aux exemples qui précèdent, mais elle en couvre toutes les variantes réalisées dans le même esprit.

## Revendications

1. Structure complexe utilisable pour la réfection de conduites, constituée par :
- un support textile (1) comportant au moins une nappe fibreuse constituée de fibres discontinues orientées au hasard les unes par rapport aux autres, et ce sensiblement dans le plan de ladite nappe, associée à des éléments de renfort destinés à lui conférer des caractéristiques mécaniques appropriées dans le sens longitudinal et transversal, la liaison entre les différents éléments constituant le renfort textile étant obtenue par couture/tricotage, les colonnes de mailles étant disposées dans le sens longitudinal du complexe,
- une couche superficielle étanche (2) recouvrant l'une des faces du support textile (1) précité,
*caractérisé* en ce que la liaison entre la couche superficielle étanche (2) et la surface du support textile (1), est obtenue par collage par l'intermédiaire d'au moins un film synthétique (3) à base de matière thermoplastique, ledit film étant maintenu contre la structure fibreuse (1) par les coutures de liaison (4) de cette dernière, et étant porté, lors de l'application de la couche superficielle (2), à une température telle qu'il soit intimement lié à celle-ci.

2. Structure complexe selon la revendication 1, caractérisée en ce que le film (3) associé à la structure fibreuse (1) est de même nature que la couche étanche superficielle (2).

3. Structure complexe selon la revendication 1, caractérisée en ce le film (3) associé à la structure fibreuse (1) est à base d'une matière thermomoplastique ayant un point de fusion inférieur à celui de la matière constituant la couche superficielle (2).

4. Structure complexe selon la revendication 3, caractérisée en ce que le film de liaison thermofusible est constitué par un film de polyéthylène ayant un point de fusion de l'ordre de 160°C.

5. Structure complexe selon la revendication 3, caractérisée en ce que le fim de liaison est constitué par un film à base de copolyamide ayant un point de fusion de 105°C à 120°C.

6. Structure complexe selon l'une des revendications 1 à 5, caractérisée en ce que les éléments de renfort sont constitués par des mèches parallèles de filaments de verre et/ou de tissu chaîne et trame également à base de mèches de verre, les coutures de liaison étant réalisées de telle sorte que les chainettes soient orientées dans le sens de la longueur de l'article et soient positionnées entre deux mèches longitudinales consécutives.

7. Structure complexe selon l'une des revendications 1 à 6, caractérisée en ce que le support textile (1) comporte, sur sa face externe située du côté de la couche étanche (2), une nappe textile (18) apte à s'allonger dans le sens transversal.

8. Structure complexe selon la revendication 7, caractérisée en ce que la nappe textile est constituée par un tissu chaîne et trame en fils synthétiques, polyester notamment, permettant d'obtenir un allongement de l'ordre de 10 % ou légèrement plus dans le sens trame.

9. Structure complexe selon l'une des revendication 1 à 8, caractérisée en ce que la liaison entre la couche superficielle étanche et la surface du support textile (1) est obtenue par l'intermédiaire d'un seul film synthétique (3) disposé entre la couche superficielle étanche (2) et la surface externe du support textile (1).

10. Structure complexe selon l'une des revendications 1 à 8, caractérisée en ce que la liaison entre la couche superficielle étanche (2) et la surface du support textle (1) est obtenue par l'intermédiaire de deux films synthétiques (3) à base de matière thermoplastique, l'un disposé entre la couche superficielle étanche (2) et la surface du support textile (1), l'autre étant disposée à l'intérieur du support textile immédiatement en dessous de la nappe textile (18) de surface.

11. Structure tubulaire réalisée à partir d'une structure complexe selon l'une des revendications 1 à 10, caractérisée en ce que les deux bords latéraux (5,6) sont reliés entre eux par une couture (7), un élément de renforcement en forme de bande (8) étant rapporté au-dessus de la zone de liaison et fixé à la couche étanche (2).

12. Structure tubulaire selon la revendication 11, caractérisée en ce que l'élément de renforcement (8) en forme de bande est constitué par un ruban tissé dont la trame est continue et forme une lisière le long des bords, ledit tissu étant emprisonné entre deux films (10,11) qui débordent latéralement par rapport aux lisières et qui permettent l'association par thermocollage avec la couche d'étanchéité (2).

13. Structure tubulaire selon l'une des revendications 11 et 12, caractérisée en ce que la zone de jonction J comporte une bande textile de renforcement (21) cousue à ce niveau sur toute la longueur du tube et qui assure un recouvrement de part et d'autre de la couture (7).

14. Structure tubulaire selon la revendication 13, caractérisée en ce que la bande textile de renforcement est constituée par la structure de base elle-même, la liaison entre les deux bords de cette structure étant réalisée en effectuant la couture (7) en retrait par rapport à l'un des bords (5) dont la partie libre (20) recouvre, après couture, l'autre bord (6) sur quelques centimètres de largeur.

15. Structure tubulaire selon la revendication 13, caractérisée en ce que la bande textile de renforcement (21) est constituée par un tissu raide et nerveux, la structure complexe de base (1) étant positionnée bord à bord et la couture (7) assurant la jonction emprisonnant la bande de renforcement superficielle (21) dans sa partie centrale.
